# EUROPÄISCHE PATENTSCHRIFT

(11) **EP 3 706 145 B1**
(45) Veröffentlichungstag und Bekanntmachung des Hinweises auf die Patenterteilung: **31.05.2023**
(21) Anmeldenummer: 19160763.9
(22) Anmeldetag: 05.03.2019
(51) Int. Cl.: H01B 17/00, H01B 17/28, G01K 11/32, H01F 27/04, G01R 15/24

(54) **HOCHSPANNUNGSDURCHFÜHRUNG MIT TEMPERATURERFASSUNG UND TRANSFORMATORVORRICHTUNG MIT DER HOCHSPANNUNGSDURCHFÜHRUNG**
HIGH VOLTAGE FEED-THROUGH WITH TEMPERATURE DETECTION AND TRANSFORMER DEVICE WITH THE HIGH VOLTAGE FEED-THROUGH
TRAVERSÉE HAUTE TENSION À DÉTECTION DE TEMPÉRATURE ET DISPOSITIF DE TRANSFORMATEUR DOTÉ DE LA TRAVERSÉE HAUTE TENSION

(43) Veröffentlichungstag der Anmeldung: 09.09.2020
(73) Patentinhaber: Siemens Energy Global GmbH & Co. KG, 81739 München (DE)
(72) Erfinder: Kleinfeld, Friedemann, 51063 Köln (DE); Langens, Achim, 53797 Lohmar (DE); Schnitzler, Tim, 52372 Kreuzau (DE); Titze, Joachim, 40882 Ratingen (DE)

(56) Entgegenhaltungen:
- EP-A1- 3 428 934
- WO-A1-2017/152985
- JP-A- H04 296 409
- JP-U- S5 999 317

## Beschreibung

Die Erfindung betrifft eine Hochspannungsdurchführung mit einem durch einen Isolierkörper hindurchgeführten Innenleiter, der sich zwischen einem freiluftseitigen Ende und einem ölseitigen Ende der Hochspannungsdurchführung erstreckt, sowie mit einem Lichtwellenleiter zum Messen einer Temperatur der Hochspannungsdurchführung, wobei der Lichtwellenleiter am ölseitigen Ende aus der Hochspannungsdurchführung herausgeführt ist.

Eine Hochspannungsdurchführung ist aus der WC 2017/152985 A1 bekannt. Die bekannte Hochspannungsdurchführung wird üblicherweise dazu eingesetzt, den auf Hochspannungspotenzial liegenden Innenleiter durch eine auf Erdpotenzial liegende Wandung zu führen. Beispielsweise im Fall einer Transformatordurchführung bildet die Wandung bzw. Transformatorkesselwand ein Gehäuse (Kessel) eines Transformators. Üblicherweise ist die Hochspannungsvorrichtung Teil einer Hochspannungsanlage mit mehreren Hochspannungskomponenten wie Transformatoren oder Schaltanlagen. Im Betrieb der Hochspannungsvorrichtung ist der Innenleiter von einem relativ hohen Strom durchflossen. Dieser Strom kann bei der bekannten Hochspannungsdurchführung mittels eines Lichtwellenleiters gemessen werden. Der Lichtwellenleiter ist dabei zumindest abschnittsweise an dem Innenleiter geführt. Dazu werden in den Lichtwellenleiter Lichtsignale eingespeist und, nachdem die Lichtsignale den Lichtwellenleiter durchlaufen, aus dem Lichtwellenleiter ausgekoppelt und ausgewertet. Beispielsweise kann mittels eines in den Lichtwellenleiter eingespeisten Lichtsignals die Temperatur ortsaufgelöst unter Ausnutzung einer temperaturabhängigen Lichtstreuung bestimmt werden. Bei der bekannten Hochspannungsdurchführung ist der Lichtwellenleiter durch einen Befestigungsflansch der Hochspannungsdurchführung nach außen hindurchgeführt. Als Hochspannungsdurchführung wird hierbei eine Durchführung verstanden, die auf eine Isolierung einer Spannung von mehr als 1 kV ausgelegt ist.

Aus der EP 3 428 934 A1 ist eine weitere Durchführungseinrichtung bekannt, bei der ein Lichtwellenleiter zum Erfassen von Temperaturdaten eingesetzt ist.

Die Aufgabe der Erfindung ist es, eine eingangs genannte Hochspannungsdurchführung vorzuschlagen, die möglichst zuverlässig und kostengünstig ist.

Die Aufgabe wird bei einer artgemäßen Hochspannungsdurchführung erfindungsgemäß dadurch gelöst, dass der Lichtwellenleiter an einem aus der Hochspannungsdurchführung herausgeführten Ende einen Stecker aufweist, der zum Verbinden in einem Transformator mit einer Anschlussleitung des Transformators zur Weiterleitung von Temperaturmessdaten eingerichtet ist. Der Lichtwellenleiter, mittels dessen eine Temperatur der Hochspannungsdurchführung gemessen werden kann, insbesondere eine Innenleitertemperatur, wird demnach nicht im Bereich des Befestigungsflansches, sondern über das ölseitige Ende der Hochspannungsdurchführung aus der Hochspannungsdurchführung herausgeführt. Als ölseitiges Ende wird dasjenige der beiden Enden der Hochspannungsdurchführung bezeichnet, das dazu eingerichtet ist, in einem Ölgefüllten Kessel einer Transformatorvorrichtung bzw. eines Transformators angeordnet zu werden. Geeigneterweise ist der Innenleiter am ölseitigen Ende der Hochspannungsdurchführung dazu eingerichtet, mit einer Wicklung des Transformators verbunden zu werden. Das freiluftseitige Ende der Hochspannungsdurchführung ist hingegen zweckmäßigerweise zum Verbinden mit einer Freileitung eingerichtet.

Ein Vorteil der vorliegenden Erfindung ist es, dass ein Transformatoröl, das einen Raum zwischen dem ölseitigen Ende und einer Kesselwand des Transformators ausfüllt, eine gute Isolierung zwischen dem Hochspannungspotenzial des Innenleiters und dem Erdpotenzial der Kesselwand bereitstellt, so dass ein einfaches Verbinden des Lichtwellenleiters mit einer Auswerteeinheit zum Auswerten der mittels des Lichtwellenleiters ermittelten Sensordaten ermöglicht ist. Auf eine zusätzliche Durchführung zum isolierten Durchführen des Innenleiters aus der Durchführung kann verzichtet werden. In Fällen, in denen die Hochspannungsdurchführung einen Spannungsteileranschluss umfasst, der am Befestigungsflansch angeordnet ist, bietet die erfindungsgemäße Lösung eine Vereinfachung des Aufbaus, da am ölseitigen Ende in einem solchen Fall mehr Freiraum gegeben ist als in der räumlichen Nähe der elektrischen Anschlüsse des Spannungsteileranschlusses am Befestigungsflansch.

Es ist im Rahmen der Erfindung selbstredend möglich, die Temperatur nicht lediglich an einer einzigen, sondern an mehreren Stellen der Hochspannungsdurchführung, z.B. ortsaufgelöst, zu erfassen.

Gemäß einer Ausführungsvariante der Erfindung ist der Lichtwellenleiter durch einen Hohlraum im Innenleiter geführt. Dies hat insbesondere Vorteile bei der Herstellung der Hochspannungsdurchführung, weil der Lichtwellenleiter auf einfache Weise durch den Innenleiter innen hindurchgeführt werden kann.

Gemäß einer weiteren Variante ist der Lichtwellenleiter zwischen dem Innenleiter und dem Isolierkörper geführt. Hier kann der Innenleiter beispielsweise durch einen Spalt zwischen dem Innenleiter und dem Isolierkörper geführt sein. Auch kann der Lichtwellenleiter durch einen dazu vorgesehenen Hohlraum im Innenleiter geführt sein. Es ist dabei selbstredend denkbar, dass der Lichtwellenleiter abschnittsweise durch den Hohlraum, zwischen dem Innenleiter und dem Isolierkörper und/oder auch innerhalb des Innenleiters geführt ist. Ist der Lichtwellenleiter zwischen dem Isolierkörper und dem Innenleiter geführt, so ist er vorteilhafterweise auf diese Weise bereits durch den Innenleiter und den Isolierkörper ohne zusätzliche Maßnahmen örtlich fixiert.

Erfindungsgemäß weist der Lichtwellenleiter an einem aus der Hochspannungsdurchführung herausgeführten Ende einen Stecker auf, der zum Verbinden mit einer Anschlussleitung eines Transformators oder einer Anschlusseinrichtung zur Weiterleitung von Temperaturmessdaten eingerichtet ist. Der Lichtwellenleiter kann entsprechend auf einfache Weise bei der Montage der Hochspannungsdurchführung mit der Anschlussleitung im Transformator oder der Anschlusseinrichtung verbunden werden, ohne weitere Montagemaßnahmen.

Bevorzugt weist der Lichtwellenleiter an einem aus der Hochspannungsdurchführung herausgeführten Ende eine Überlänge auf. Die Überlänge kann vorteilhaft zu einer einfachen Verbindung des Lichtwellenleiters mit der Anschlussleitung bzw. der Anschlusseinrichtung genutzt werden. Die Überlänge, also die Länge des Lichtwellenleiters zwischen dem Ort der Herausführung aus der Hochspannungsdurchführung und dessen freien Ende, kann beispielsweise zwischen einem und zwei Metern betragen.

Gemäß einem Ausführungsbeispiel der Erfindung umfasst der Isolierkörper ein Aktivteil mit konzentrisch um den Innenleiter angeordneten elektrisch leitenden Steuereinlagen, die durch Isolierlagen voneinander getrennt sind. Die Isolierlagen können beispielsweise geeignetes Papier oder synthetisches Material umfassen, das mit einem Harz imprägniert ist. Die Steuereinlagen dienen zur Feldsteuerung und sind geeigneterweise konzentrisch um den Innenleiter angeordnet und durch die Isolierlagen voneinander beabstandet.

Gemäß einer weiteren Ausführungsform ist das Aktivteil von einer Nebenisolation zumindest teilweise umgeben, wobei die Nebenisolation gasförmig, pastös oder schaumförmig ist, wobei der Lichtwellenleiter zumindest abschnittsweise in der Nebenisolation geführt ist. Auf diese Weise ist auch dort Temperaturmessung am Innenleiter ermöglicht, wo der Innenleiter vom Aktivteil nicht mehr umgeben ist.

Die Erfindung betrifft ferner eine Transformatorvorrichtung mit einer Transformatorwicklung. Die Transformatorvorrichtung kann geeigneterweise mehrere Transformatorwicklungen umfassen, die im gleichen Transformatorkessel untergebracht sind.

Die Erfindung hat die Aufgabe, eine solche Transformatorvorrichtung vorzuschlagen, die möglichst zuverlässig und kostengünstig ist.

Die Aufgabe wird bei einer artgemäßen Transformatorvorrichtung erfindungsgemäß dadurch gelöst, dass die Transformatorwicklung mittels einer erfindungsgemäßen Hochspannungsdurchführung mit einer Freiluftleitung verbindbar ist. Umfasst die Transformatorvorrichtung mehrere Transformatorwicklungen, so ist vorzugsweise jede Transformatorwicklung mittels einer zugeordneten erfindungsgemäßen Hochspannungsvorrichtung mit einer eigenen Freiluftleitung verbindbar.

Die Vorteile der erfindungsgemäßen Transformatorvorrichtung ergeben sich insbesondere aus den bereits beschriebenen Vorteilen der erfindungsgemäßen Hochspannungsdurchführung.

Gemäß einer Ausführungsform der Erfindung umfasst die Transformatorvorrichtung eine Sensorvorrichtung, die an einer Transformatorkesselwand angeordnet ist und mit dem Lichtwellenleiter verbunden ist. Geeigneterweise ist die Sensorvorrichtung mit einer Anschlusseinrichtung ausgestattet und dazu eingerichtet, die Lichtsignale aus dem Lichtwellenleiter zu empfangen und an eine Auswerteeinheit weiterzuleiten. Die Weiterleitung kann kabelgebunden oder kabellos erfolgen, je nach Ausgestaltung der Sensorvorrichtung.

Gemäß einer Ausführungsvariante ist die Sensorvorrichtung zur Temperaturmessung bzw. Temperaturerfassung mittels des Lichtwellenleiters eingerichtet. Hierbei kann die Sensorvorrichtung die Lichtsignale zum Einspeisen in den Lichtwellenleiter selbst erzeugen. Geeigneterweise ist die Sensorvorrichtung dazu eingerichtet die empfangenen Lichtsignale in elektrische Signale umzuwandeln und gegebenenfalls auszuwerten und/oder an eine weitere Empfangseinrichtung weiterzuleiten oder zu senden.

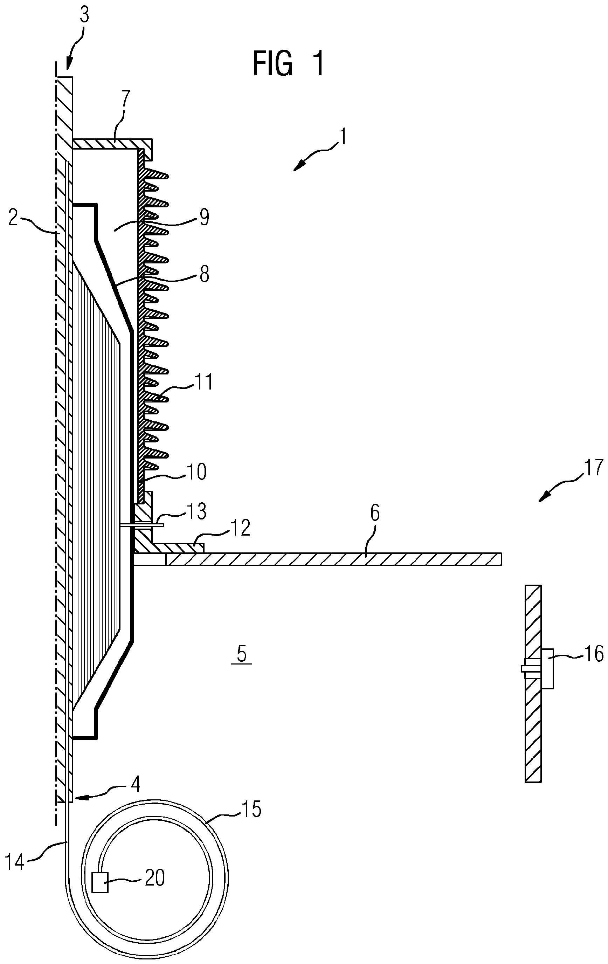

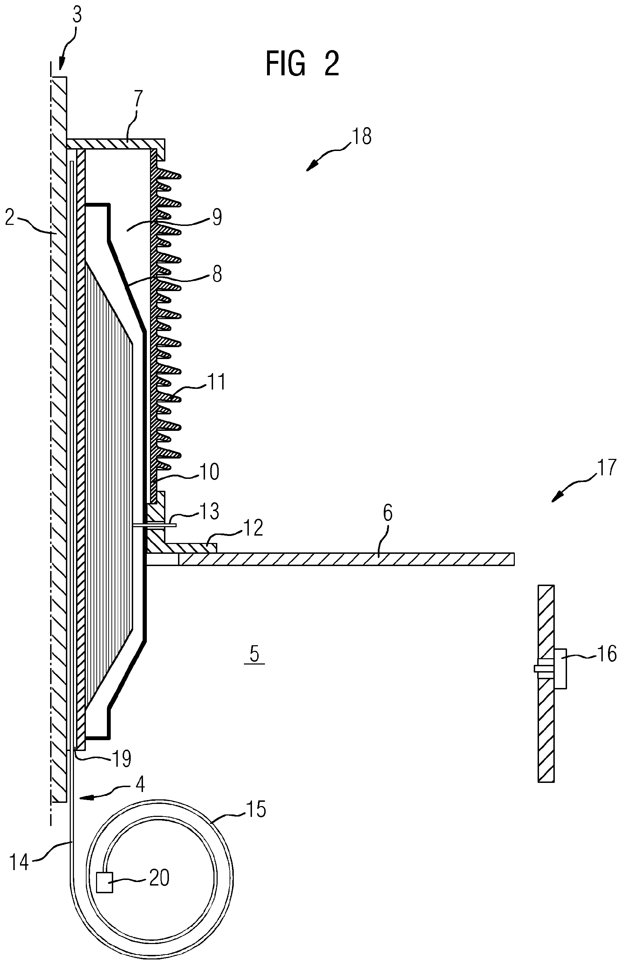

Die Erfindung wird im Folgenden anhand der in den Figuren 1 und 2 dargestellten Ausführungsbeispiele weiter erläutert.
Figur 1 zeigt ein erstes Ausführungsbeispiel der erfindungsgemäßen Hochspannungsdurchführung in einer schematischen Darstellung;
Figur 2 zeigt ein zweites Ausführungsbeispiel der erfindungsgemäßen Hochspannungsdurchführung in einer schematischen Darstellung.

In Figur 1 ist eine Hochspannungsdurchführung 1 dargestellt. Die Hochspannungsdurchführung 1 weist einen Innenleiter 2, der sich zwischen einem freiluftseitigen Ende 3 und einem ölseitigen Ende 4 der Hochspannungsdurchführung 1 erstreckt. Das ölseitige Ende der Hochspannungsdurchführung 1 steckt in einem mit einem Isolieröl gefüllten Ölkessel 5 einer Transformatorvorrichtung 17 mit einer Kesselwand 6. Die Hochspannungsdurchführung 1 umfasst ferner einen Isolierkörper 7, durch den der Innenleiter 2 hindurchgeführt ist. Der Isolierkörper 7 umfasst ein Aktivteil 8 mit konzentrischen Steuereinlagen, eine gasgefüllte Nebenisolation 9, ein Gehäuse 10 sowie Isolatorschirme 11 und einen Befestigungsflansch 12 zur Befestigung der Hochspannungsdurchführung 1 an der Kesselwand 6. Im Befestigungsflansch 12 befindet sich ein Spannungsteilerabgriff 13 zur Spannungsmessung bzw. Kapazitätsmessung.

Ein Lichtwellenleiter 14 ist in einem Hohlraum des Innenleiters 2 geführt und am ölseitigen Ende 4 aus der Hochspannungsdurchführung 1 herausgeführt. Der Lichtwellenleiter 14 weist eine Überlänge 15 auf, so dass der Lichtwellenleiter 14 mit einer Anschlusseinrichtung 16 der Transformatorvorrichtung 17 verbindbar ist, die eine geeignete Sensorvorrichtung sein kann. Dazu ist der Lichtwellenleiter 14 mit einem geeigneten Stecker 18 ausgestattet.

In Figur 2 ist eine Hochspannungsdurchführung 18 dargestellt, wobei gleiche und gleichartige Bauteile und Elemente der Hochspannungsdurchführungen 1 bzw. 18 der Figuren 1 und 2 mit jeweils gleichen Bezugszeichen versehen sind. Um Wiederholungen zu vermeiden wird daher bei der Beschreibung der Figur 2 lediglich auf die Unterschiede der beiden Ausführungsbeispiele eingegangen.

Im Gegensatz zu der Hochspannungsdurchführung 1 der Figur 1 weist die Hochspannungsdurchführung 18 einen schmalen Spalt 19 zwischen dem Aktivteil 8 und dem Innenleiter 2. Durch diesen Spalt 19 ist der Lichtwellenleiter 14 am Innenleiter 2 geführt und aus der Hochspannungsdurchführung 1 an ihrem ölseitigen Ende 4 herausgeführt.

## Patentansprüche

1. Hochspannungsdurchführung (1,18) mit einem durch einen Isolierkörper (7) hindurchgeführten Innenleiter (2), der sich zwischen einem freiluftseitigen Ende (3) und einem ölseitigen Ende (4) der Hochspannungsdurchführung erstreckt, sowie mit einem Lichtwellenleiter (14) zum Messen wenigstens einer Temperatur der Hochspannungsdurchführung,
wobei der Lichtwellenleiter (14) am ölseitigen Ende (4) aus der Hochspannungsdurchführung herausgeführt ist,
**dadurch gekenzeichnet**, dass
der Lichtwellenleiter (14) an einem aus der Hochspannungsdurchführung herausgeführten Ende einen Stecker (20) aufweist, der zum Verbinden in einem Transformator mit einer Anschlussleitung des Transformators zur Weiterleitung von Temperaturmessdaten eingerichtet ist.

2. Hochspannungsdurchführung (1) nach Anspruch 1, wobei der Lichtwellenleiter (14) durch einen Hohlraum im Innenleiter geführt ist.

3. Hochspannungsdurchführung (18) nach Anspruch 1 oder 2, wobei der Lichtwellenleiter (14) zwischen dem Innenleiter (2) und dem Isolierkörper (7) geführt ist.

4. Hochspannungsdurchführung (1,18) nach einem der vorangehenden Ansprüche, wobei der Lichtwellenleiter (14) an einem aus der Hochspannungsdurchführung herausgeführten Ende eine Überlänge (15) aufweist.

5. Hochspannungsdurchführung (1,18) nach einem der vorangehenden Ansprüche, wobei der Isolierkörper (7) ein Aktivteil (8) mit konzentrisch um den Innenleiter angeordneten elektrisch leitenden Steuereinlagen umfasst, die durch Isolierlagen voneinander getrennt sind.

6. Hochspannungsdurchführung (1,18) nach Anspruch 5, wobei das Aktivteil (8) von einer Nebenisolation (9) zumindest teilweise umgeben ist, wobei die Nebenisolation (9) gasförmig, pastös oder schaumförmig ist und der Lichtwellenleiter (14) zumindest abschnittsweise in der Nebenisolation (9) geführt ist.

7. Transformatorvorrichtung (17) mit einer Transformatorwicklung,
**dadurch gekenzeichnet**, dass
die Transformatorwicklung mittels einer Hochspannungsdurchführung (1,18) nach einem der Ansprüche 1 bis 6 mit einer Freiluftleitung verbindbar ist.

8. Transformatorvorrichtung (17) nach Anspruch 7, wobei die Transformatorvorrichtung wobei die Transformatorvorrichtung eine Sensorvorrichtung (16) umfasst, die an einer Transformatorkesselwand (6) angeordnet ist und mit dem Lichtwellenleiter (14) verbunden ist.

9. Transformatorvorrichtung (17) nach einem der Ansprüche 7 oder 8, wobei die Sensorvorrichtung (16) zur Temperaturmessung mittels des Lichtwellenleiters (14) eingerichtet ist.

## Claims

1. High-voltage bushing (1, 18) comprising an internal conductor (2), which is guided through an insulating body (7) and which extends between an outdoor-side end (3) and an oil-side end (4) of the high-voltage bushing, and comprising an optical waveguide (14) for measuring at least a temperature of the high-voltage bushing,
the optical waveguide (14) being guided out of the high-voltage bushing at the oil-side end (4),
**characterized in that**
the optical waveguide (14) has a plug connector (20) at an end that is guided out of the high-voltage bushing, said plug connector being configured for connection in a transformer to a connecting line of the transformer for forwarding temperature measurement data.

2. High-voltage bushing (1) according to Claim 1, wherein the optical waveguide (14) is guided through a cavity in the internal conductor.

3. High-voltage bushing (18) according to Claim 1 or 2, wherein the optical waveguide (14) is guided between the internal conductor (2) and the insulating body (7).

4. High-voltage bushing (1, 18) according to any of the preceding claims, wherein the optical waveguide (14) has an excess length (15) at an end that is guided out of the high-voltage bushing.

5. High-voltage bushing (1, 18) according to any of the preceding claims, wherein the insulating body (7) comprises an active part (8) with electrically conductive control inserts that are arranged concentrically around the internal conductor and are separated from one another by insulating layers.

6. High-voltage bushing (1, 18) according to Claim 5, wherein the active part (8) is at least partly surrounded by a secondary insulation (9), wherein the secondary insulation (9) is gaseous, pasty or in the form of foam and the optical waveguide (14) is guided at least in portions in the secondary insulation (9).

7. Transformer device (17) comprising a transformer winding, **characterized in that**
the transformer winding is connectable to an overhead line by means of a high-voltage bushing (1, 18) according to any of Claims 1 to 6.

8. Transformer device (17) according to Claim 7, wherein the transformer device comprises a sensor device (16) arranged on a transformer tank wall (6) and connected to the optical waveguide (14).

9. Transformer device (17) according to either of Claims 7 and 8, wherein the sensor device (16) is configured for temperature measurement by means of the optical waveguide (14) .

## Revendications

1. Traversée (1, 18) de haute tension comprenant un conducteur (2) intérieur, qui passe à travers un corps (7) isolant et qui s'étend entre une extrémité (3) du côté à l'extérieur et une extrémité (4) du côté de l'huile de la traversée de haute tension, ainsi qu'un guide (14) d'ondes lumineuses de mesure d'au moins une température de la traversée de haute tension,
dans laquelle le guide (14) d'ondes lumineuses sort à l'extrémité (4) du côté de l'huile de la traversée de haute tension,
**caractérisée** ce que
le guide (14) d'ondes lumineuses a, à son extrémité sortie de la traversée de haute tension, une fiche (20), qui, pour la liaison dans un transformateur ayant une ligne de raccordement du transformateur, est ménagée pour l'acheminement de données de mesure de la température.

2. Traversée (1) de haute tension suivant la revendication 1, dans laquelle le guide (14) d'ondes lumineuses passe dans une cavité du conducteur intérieur.

3. Traversée (18) de haute tension suivant la revendication 1 ou 2, dans laquelle le guide (14) d'ondes lumineuses passe entre le conducteur (2) intérieur et le corps (7) isolant.

4. Traversée (1, 18) de haute tension suivant l'une des revendications précédentes, dans laquelle le guide (14) d'ondes lumineuses a un prolongement (15) à une extrémité sortie de la traversée de haute tension.

5. Traversée (1, 18) de haute tension suivant l'une des revendications précédentes, dans laquelle le corps (7) isolant comprend une partie (8) active ayant des inserts de commande conducteurs de l'électricité disposés concentriquement autour du conducteur intérieur et séparés les uns des autres par des couches isolantes.

6. Traversée (1, 18) de haute tension suivant la revendication 5, dans laquelle la partie (8) active est entourée au moins en partie d'une isolation (9) secondaire, dans laquelle l'isolation (9) secondaire est gazeuse, pâteuse ou en forme de mousse, et le guide (14) d'ondes lumineuses passe au moins par endroits dans l'isolation (9) secondaire.

7. Installation (17) à transformateur comprenant un enroulement de transformateur,
**caractérisée en ce que**
l'enroulement de transformateur peut être relié à une ligne à l'extérieur, au moyen d'une traversée (1, 18) de haute tension suivant l'une des revendications 1 à 6.

8. Installation (17) à transformateur suivant la revendication 7, dans laquelle l'installation à transformateur comprend un dispositif (16) capteur, qui est monté sur une paroi (6) de la cuve du transformateur et qui est relié au guide (14) d'ondes lumineuses.

9. Installation (17) à transformateur suivant l'une des revendications 7 ou 8, dans laquelle le dispositif (16) capteur est conçu pour mesurer des températures au moyen du guide (14) d'ondes lumineuses.
